# EUROPÄISCHE PATENTANMELDUNG

(11) **EP 4 722 441 A1**
(43) Veröffentlichungstag der Anmeldung: **08.04.2026**
(21) Anmeldenummer: 25196679.2
(22) Anmeldetag: 19.08.2025
(51) Int. Cl.: D06F 67/04, B25J 9/00

(54) **VORRICHTUNG ZUR HANDHABUNG VON SERVIETTEN UND VERFAHREN ZUR HANDHABUNG VON SERVIETTEN**

(30) Priorität: 02.10.2024 DE 102024128489
(71) Anmelder: Herbert Kannegiesser GmbH, 32602 Vlotho (DE)
(72) Erfinder: Heinz, Engelbert, 32602 Vlotho (DE)
(74) Vertreter: Hoener, Matthias

(57) **Zusammenfassung**

Die Erfindung schafft eine Vorrichtung und ein Verfahren zur Handhabung von Servietten, mit dem sich der Handhabungsprozess zeiteffizienter und kostengünstiger gestalten lässt. Das wird dadurch erreicht, dass mindestens eine von den Servietten, insbesondere ein Serviettenstapel, über jeweils einem von mehreren nebeneinander angeordneten Balken einer Ablegeeinrichtung hängt, und zwar insbesondere derart, dass die Serviette mit einem Mittelbereich, vorzugsweise mit einer Mitte, über einem Balken abgelegt ist. Ein wesentliches Merkmal der Erfindung besteht darin, dass durch mindestens einen mehrachsigen Roboter, der mindestens zwei Greifelemente aufweist, die Greifelemente vollautomatisiert und gezielt an die mindestens eine Servietten heranfahrbar sind und die mindestens eine Serviette auf einem Transportmittel abgelegt wird.

## Beschreibung

Die Erfindung betrifft eine Vorrichtung zur Handhabung von Servietten gemäß dem Oberbegriff des Anspruchs 1. Des Weiteren betrifft die Erfindung ein Verfahren zur Handhabung von Servietten gemäß dem Oberbegriff des Anspruchs 11.

Servietten, insbesondere Mundservietten, werden in der Gastronomie und Hotellerie in großen Mengen verwendet. Um diese großen Mengen an Servietten in gewerblichen Wäschereien zu handhaben, werden die einzelnen Servietten in sogenannte Ablegemaschinen bzw. Ablegeeinrichtungen über Balken abgelegt. Zunächst durchlaufen die Servietten einen entsprechenden Waschprozess und werden über Eingabemaschinen mehrbahnig Mangeln zugeführt. Nach dem Mangeln werden die einzelnen Servietten händisch oder automatisch, d. h. maschinell, über die Balken gehängt. Über jeweils einen Balken kann eine Serviette oder eine Vielzahl von Servietten zu einem Stapel übereinander abgehängt werden, und zwar so, dass die einzelnen Servietten mit ihrer Mitte oder einem Mittelbereich über den Balken abgelegt werden, sodass die herabhängenden Hälften der Serviette wenigstens nahezu deckungsgleich nebeneinander hängen. So lassen sich 10, 20 oder 30 bis zu 50 Servietten zu Stapeln übereinander ablegen. Die Balken können dabei einen runden, einen rechteckigen oder einen polygonalen Querschnitt aufweisen und entsprechen in ihrer Länge mindestens einer Breite der Serviette. In der Regel sind die Balken geringfügig länger als die Breite der Servietten.

Sobald ein Balken mit einer vorgegebenen Anzahl von Servietten bestückt ist, wird ein nachfolgender Balken in der gleichen Weise mit Servietten bestückt. Dabei ist es denkbar, dass die einzelnen Balken parallel zueinander einem Förderorgan zugeordnet sind und schrittweise, wie beispielsweise in einer Trommel bzw. Revolvertrommel, weitergedreht werden. Es ist bekannt, dass eine Vielzahl von derartigen Balken aufeinanderfolgend aber auch nebeneinander angeordnet ist, sodass sich die Ablegeeinrichtungen bzw. mehrere Balken gleichzeitig parallel in der Ablegeeinrichtung bestücken lassen.

Für die weitere Handhabung der Servietten ist es bekannt, dass die einzelnen Servietten oder ein Serviettenstapel händisch von Personen von den Balken abgenommen und auf ein Transportmittel, wie beispielsweise ein Förderband, abgelegt werden. Diese händische Handhabung erweist sich als notwendig, da das Ergreifen und Umsetzen der Stapel an Servietten eine hohe Flexibilität und Fingerfertigkeit erfordert. Allerdings erweist sich bei der großen Anzahl von zu behandelnden Servietten der Einsatz von Personen als sehr zeitineffizient und kostenintensiv.

Der Erfindung liegt die Aufgabe zugrunde, eine Vorrichtung und ein Verfahren zur Handhabung von Servietten zu schaffen, mit dem sich der beschriebene Prozess zeiteffizienter und kostengünstiger gestalten lässt.

Eine Vorrichtung zur Lösung der genannten Aufgabe weist die Merkmale des Anspruchs 1 auf. Demnach ist es vorgesehen, dass mindestens eine Serviette, vorzugsweise eine Vielzahl von Servietten, insbesondere ein Serviettenstapel, über jeweils einen von mehreren nebeneinander angeordneten Balken einer Ablegeeinrichtung hängen, und zwar insbesondere derart, dass die Serviette mit einem Mittelbereich, vorzugsweise mit einer Mitte, über einem Balken abgelegt ist. Ein wesentliches Merkmal der Erfindung besteht darin, dass durch mindestens einen mehrachsigen Roboter, der mindestens zwei Greifelemente aufweist, die Greifelemente vollautomatisiert und gezielt an die mindestens eine Serviette heranfahrbar sind und die mindestens eine Serviette auf einem Transportmittel abgelegt wird. Durch die Verwendung eines mehrachsigen Roboters mit Greifelementen lässt sich das Umlegen der Servietten von der Ablegeeinrichtung auf das Transportmittel zur weiteren Bearbeitung komplett automatisieren, wodurch sich die gesamte Handhabung der Servietten sehr zeiteffizient gestalten lässt und darüber hinaus kostengünstig ist.

Der mehrachsige Roboter lässt sich derart programmieren, dass er gezielt und mit der notwendigen Genauigkeit sowie Verlässlichkeit einzelne Servietten oder die hängenden Stapel von Servietten anfährt, ergreift, umpositioniert, ablegt und freigibt. Insbesondere die hohe Taktzahl, mit welcher der Roboter den vorgenannten Prozess durchführen kann, führt zu einer sehr zeiteffizienten Verbesserung der bekannten Systeme.

Bevorzugt ist es weiter vorgesehen, dass die Greifelemente jeweils ein Klammerpaar zum Ergreifen der mindestens einen Serviette aufweisen, wobei die Klammerpaare beweglich ausgebildet sind, um in die mindestens eine hängende Serviette hineinzugreifen. Ein bevorzugtes Ausführungsbeispiel kann es vorsehen, dass die Klammerpaare durch zwei parallel zueinander verfahrbare und parallel zueinander ausgerichtete Zylinder gebildet sind. Durch die spezielle Ausführung der Greifelemente können diese seitlich in oder an die von dem Balken frei herunterhängenden Hälften der Serviette oder des Stapels von Servietten herangefahren werden und durch Schließen der Klammermäuler die Servietten ergreifen. Im Folgenden hebt der Roboterarm die Greifelemente samt den ergriffenen Servietten an, um sie auf dem Transportmittel wieder abzulegen. Gleichsam ist es denkbar, dass die Greifelemente in die nach unten offene U-Form der von dem Balken hängenden Servietten hineingeschwenkt werden, um auf diese Art die Servietten zu ergreifen und umzulegen. Ein weiteres Ausführungsbeispiel kann es vorsehen, dass die Greifelemente derart ausgebildeten sind, dass die Servietten von oben direkt von dem Balken ergriffen und nach oben abgezogen werden.

Ein weiteres vorteilhaftes Ausführungsbeispiel der Erfindung kann es vorsehen, dass die Greifelemente als Handhabungsmittel ausgebildet sind, um einen Balken mit mindestens einer Serviette zu ergreifen und umzusetzen. Bei diesem bevorzugten Ausführungsbeispiel sind die Balken in den Ablegeeinrichtungen lösbar gelagert. Es ist denkbar, dass die einzelnen Balken mit ihren beiden Enden von oben in eine Aufnahme gesetzt sind und gleichermaßen ohne Kraftaufwand oder dass ein Mechanismus auszulösen wäre, nach oben abnehmbar sind. Bei diesem Ausführungsbeispiel ergreift das Handhabungsmittel den Balken mitsamt der einzelnen Serviette oder dem gesamten Stapel an Servietten. Der Roboter legt sodann die Servietten zusammen mit dem Balken liegend auf die Transporteinrichtung ab. Es ist denkbar, dass der Roboterarm mit den Handhabungsmitteln den Balken aus dem offenen Ende der hängenden bzw. jetzt liegenden Servietten herauszieht und in die freie Position der Ablegeeinrichtung zurücksetzt. Es ist gleichermaßen denkbar, dass ein Handhabungsmittel von dem Balken gelöst wird und der Roboter den Balken einseitig aus dem Serviettenstapel herauszieht.

Im folgenden Schritt würde der Roboter den Balken zurück in die freie Position der Ablegeeinrichtung setzen. Durch die Handhabung der Servietten mitsamt der Balken lassen sich die Servietten auf eine besonders verlässliche sowie präzise Art und Weise auf der Transporteinrichtung ablegen.

Insbesondere kann es vorgesehen sein, dass die Handhabungsmittel als Klammer, Klemmen, Greifer, Haken, Elektromagneten oder dergleichen ausgebildet sind. Dabei sind diese verschiedenen Arten der Handhabungsmittel derart ausgebildet, dass sie die beiden freien Enden der Balken, zwischen denen sich die Servietten befinden, gezielt sowie verlässlich ergreifen und wieder freigeben können.

Vorzugsweise ist es weiter denkbar, dass die Klammerpaare oder die Handhabungsmittel an eine Halterung an dem Roboter, vorzugsweise beweglich, befestigt sind, wobei diese Halterung mit der Länge der Balken korrespondiert oder der Länge der Balken entspricht. Diese Halterung ist direkt an den mehrachsigen Roboter angehängt. Es ist denkbar, dass diese Halterung eine Linearachse aufweist, um die beiden Klammerpaare bzw. Handhabungsmittel in ihrem Abstand zu variieren, um die Servietten bzw. die Balken zu ergreifen.

Weiter kann es die Erfindung vorsehen, dass ein Kamerasystem oder ein Sensor für die Bestimmung der beiden Abholpunkte der Serviette oder des Balkens der Vorrichtung bzw. dem Roboter zugeordnet sind. Dabei ist es vorgesehen, dass durch die, insbesondere 3D-, Kamera ein räumliches Bild der Servietten bzw. der Balken ermittelt wird, um die bevorzugten Abholpunkte, also die Punkte, an denen die Abholpunkte oder der Balken zu ergreifen sind, zu ermitteln. Gleichermaßen ist es denkbar, dass durch das Kamerasystem mehrere Balken aufgenommen werden und die Greifelemente an die Balken herangefahren werden, auf denen sich die meisten Servietten befinden. Dadurch kann insbesondere bei der Verwendung eines Roboters das Abholen der Serviette je nach Ort und Größe der Stapel priorisiert werden. Dadurch lassen sich Standzeiten des Roboters reduzieren oder unnötig lange Bewegungen, welche unnötig Zeit kosten, vermeiden.

Ein weiteres vorteilhaftes Ausführungsbeispiel kann es vorsehen, dass ein Steuersystem den Abholpunkten an der Serviette oder den Balken Koordinaten zuordnet und die Greifelemente gezielt an diese Koordinaten heranfahren. Insbesondere durch die Verwendung eines Roboters lassen sich die ermittelten Positionen bzw. Koordinaten besonders präzise und reproduzierbar anfahren. Durch das Erstellen eines räumlichen Koordinatensystems, dass sich gegebenenfalls zeitlich ändert, kann das Steuersystem eine optimale Abfolge des Erfassens und Umsetzens der Serviette bestimmen, um das Verfahren besonders zeiteffizient zu gestalten. Zusätzlich ist es denkbar, dass die Vorrichtung dazu entsprechende Sensoren aufweist, um die Balken bzw. die Enden der Balken zu detektieren. Da die genauen Maße bzw. Dimensionen der Vielzahl von Balken in dem Steuersystem hinterlegt sind, reicht in der Regel eine oder einige wenige Koordinaten, damit der Roboter eine Vielzahl von Balken präzise anfahren kann.

Ein weiteres vorteilhaftes Ausführungsbeispiel der Erfindung kann es vorsehen, dass der Roboter auf Schienen angeordnet ist, wobei die Schienen parallel zu den Balken der Ablegeeinrichtung ausgerichtet sind und der Roboter auf diesen Schienen von den Balken zum Transportmittel bewegbar ist. Für diese Bewegung weist der Roboter oder die Schienen entsprechende Motoren auf, die den Roboter präzise an die von der Steuereinrichtung bestimmten Positionen heranfährt. Dabei findet stets eine Optimierung zwischen dem Weg statt,s welcher von dem Roboterarm zurückgelegt werden kann und dem Weg, der durch das Verfahren auf der Schiene erreichbar ist. Das Transportmittel, bei dem es sich beispielsweise um einen Gurtförderer handeln kann, kann sich parallel zu den Schienen befinden oder an den Enden der Schienen. Es ist denkbar, dass sowohl an beiden Enden der Schienen als auch parallel zu den Schienen mehrere Transportmittel angeordnet sind, um eine Sortierung von verschiedenen Servietten bzw. verschiedenen Adressaten der Servietten vorzunehmen.

Schließlich kann es auch durch ein Ausführungsbeispiel vorgesehen sein, dass der Ablegeeinrichtung mehrere Roboter zugeordnet sind, insbesondere dass jedem der nebeneinander angeordneten Balken ein Roboter zugeordnet ist und den Robotern jeweils ein Transportmittel zugeordnet ist. Durch diese Verwendung mehrerer Roboter lässt sich die Taktzahl der bewegten Serviette nochmals steigern. Es ist denkbar, dass jeder Roboter nur jeweils einer Trommel von Balken zugeordnet ist. Gleichermaßen ist es aber auch denkbar, dass, wenn ein Roboter Leerlauf hat, dieser auf eine benachbarte Balkentrommel zugreift.

Ein Verfahren zur Lösung der eingangs genannten Aufgabe weist die Maßnahmen des Anspruchs 11 auf. Demnach ist es vorgesehen, dass eine Serviette, vorzugsweise eine Vielzahl von Servietten, über jeweils einen von mehreren nebeneinander angeordneten Balken einer Ablegeeinrichtung hängt, und zwar insbesondere derart, dass die Serviette mit einem Mittelbereich, vorzugsweise mit einer Mitte, über einem Balken abgelegt ist. Eine wesentliche Maßnahme besteht darin, dass die mindestens eine Serviette von zwei Greifelementen, die an einem mehrachsigen Roboter angeordnet sind, vollautomatisiert und gezielt ergriffen und auf einem Transportmittel abgelegt wird.

Bevorzugt ist es weiter vorgesehen, dass die Greifelemente jeweils ein Klammerpaar aufweisen, mit denen die mindestens eine Serviette ergriffen und umgesetzt wird oder dass die Greifelemente als Handhabungsmittel ausgebildet sind, mit denen ein Balken mit mindestens einer Serviette ergriffen und umgesetzt wird.

Insbesondere ist es denkbar, dass durch ein Kamerasystem oder einen Sensor zwei Abholpunkte an der Serviette oder dem Balken bestimmt werden, an die die Klammerpaare oder die Handhabungsmittel herangefahren werden, um die Servietten oder den Balken umzusetzen.

Weiter kann es erfindungsgemäß vorgesehen sein, dass durch ein Steuersystem zwei Abholpunkte an der Serviette bestimmt oder dem Balken räumliche Koordinaten zugeordnet werden, an welche die Greifelemente zum Erfassen der Serviette oder des Balkens herangefahren werden.

Vorzugsweise ist es darüber hinaus denkbar, dass der Roboter auf Schienen zwischen der Ablegeeinrichtung und dem Transportmittel verfahren wird, um einzelne Servietten oder Balken mit Servietten zu ergreifen und abzulegen.

Schließlich ist es denkbar, dass die Servietten oder die Balken von mehreren Robotern von der Ablegeeinrichtung ergriffen und auf mehrere Transportmittel abgelegt werden.

Ein bevorzugtes Ausführungsbeispiel der Erfindung wird nachfolgend anhand der Zeichnung näher erläutert. In dieser zeigen:
- Fig. 1: eine Darstellung eines erstes Ausführungsbeispiels einer Vorrichtung zur Handhabung von Servietten,
- Fig. 2: eine Ausschnittsvergrößerung der Vorrichtung gemäß Fig. 1,
- Fig. 3: eine Darstellung eines weiteren Ausführungsbeispiels einer Vorrichtung zur Handhabung von Servietten,
- Fig. 4: eine Ausschnittsvergrößerung der Vorrichtung gemäß Fig. 3,
- Fig. 5: eine Darstellung eines weiteren Ausführungsbeispiels einer Vorrichtung zur Handhabung von Servietten,
- Fig. 6: eine Darstellung eines weiteren Ausführungsbeispiels einer Vorrichtung zur Handhabung von Servietten, und
- Fig. 7: eine Darstellung eines Verfahrensschritts.

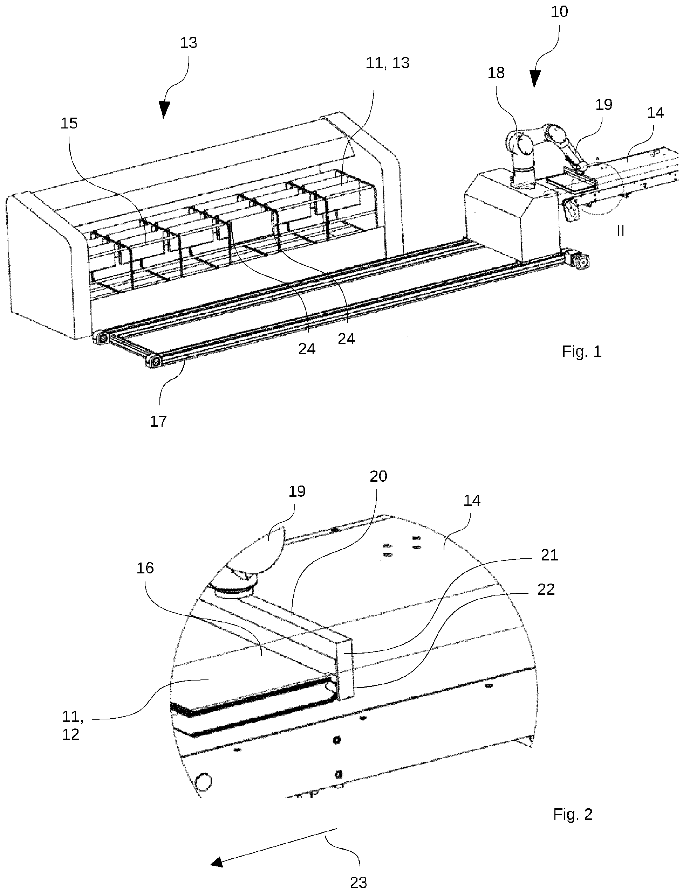

In der Fig. 1 ist ein mögliches Ausführungsbeispiel der Vorrichtung 10 dargestellt. Im Wesentlichen ist die Vorrichtung 10 dazu ausgebildet, Servietten 11 bzw. Stapel 12 von Servietten 11 von einer Ablegeeinrichtung 13, auf ein Transportmittel 14 vollautomatisiert abzulegen.

Die gewaschenen sowie gemangelten Servietten 11 werden in der Ablegeeinrichtung 13 händisch oder maschinell über Balken 15 abgelegt, und zwar derart, dass die einzelnen Servietten 11 mit einem Mittelbereich 16 über dem Balken 15 liegen, so dass zwei freie Hälften der Servietten 11 wenigstens nahezu deckungsgleich zueinander herunterhängen und so ein nach unten offenes U bilden. In der Regel wird eine Vielzahl von Servietten 11 übereinander auf dem Balken 15 abgelegt, sodass sich auf dem Balken 15 ein Stapel 12 bildet.

In der Ablegeeinrichtung 13 ist eine Vielzahl von Balken 15 nebeneinander, hintereinander und übereinander angeordnet. Es ist denkbar, dass die Balken 15 in eine trommelartige Transporteinrichtung integriert sind, sodass sich die einzelnen Balken 15 innerhalb einer Bahn, wie beispielsweise in einer Revolvertrommel, bewegen können. So lassen sich Balken 15 mit einer bestimmten Anzahl von Servietten 11 in eine Position bewegen, aus der heraus sie für den nächsten Handhabungsschritt von der Vorrichtung 10 erfasst werden können. Gleichermaßen können leere Balken 15 in eine Position bewegt werden, in der sie erneut mit Servietten 11 bestückt werden können. Die Balken 15 weisen eine Länge auf, die mindestens der Breite der Servietten 11 entspricht. Es ist denkbar, dass ein Querschnitt der Balken 15 rund oder polygonal ist.

Das hier schematisch dargestellte Transportmittel 14 kann als Gurtförderer, durchgehendes Förderband, Kettenförderer oder dergleichen ausgebildet sein. Die dort abgelegten Servietten 11 bzw. die abgelegten Stapel 12 werden für die weitere Bearbeitung abtransportiert. Bei der weiteren Bearbeitung kann es sich beispielsweise um ein Verpacken handeln.

Bei dem in der Fig. 1 dargestellten Ausführungsbeispiel befinden sich direkt vor der Ablegeeinrichtung 13 sowie parallel zu dem Transportmittel 14 Schienen 17, auf denen die Vorrichtung 10 parallel zu den Balken 15, aber auch parallel zu dem Transportmittel 14 bewegbar ist. Es sei allerdings ausdrücklich darauf hingewiesen, dass diese Anordnung der Schienen 17 nur beispielhaft ist und es vielmehr denkbar ist, dass auch andere relative Anordnungen der vorgenannten Komponenten möglich sind.

Die hier dargestellte Vorrichtung 10 weist einen mehrachsiges Roboter 18 auf. An einem Kopfende 19 des Roboters 18 ist eine Halterung 20 befestigt. An dieser Halterung 20 wiederum befinden sich Greifelemente 21, die dazu ausgebildet sind, gezielt und vollautomatisiert die Servietten 11 zu handhaben. Bei dem in der Fig. 1 dargestellten Ausführungsbeispiel der Vorrichtung 10 sind die Greifelemente 21 als Klammerpaare 22 ausgebildet. Diese Klammerpaare 22 weisen jeweils ein Klammermaul auf bzw. zwei zylindrische Klammerelemente zum Ergreifen der Serviette 11 bzw. des gesamten Stapels 12. In der Ausschnittsvergrößerung der Fig. 2 ist dargestellt, wie ein Klammerpaar 22 in einen Stapel 12 von Servietten 11 hineingreift. Auf der anderen Seite der Serviette 11 greift ein identisches Klammerpaar 22 auf die gleiche Weise in den Stapel 12 hinein. Aus der Fig. 2 geht hervor, wie der Stapel 12 der Servietten 11 auf dem Transportmittel 14 abgelegt wird, nämlich so, dass die beiden bisher freihängenden Hälften der Servietten 11 aufeinander abgelegt werden. Im Folgenden werden entweder die Klammerpaare 22 in Richtung 23 aus dem Serviettenstapel 12 herausgezogen oder die Halterung 20 ist derart ausgebildet, dass sich der Abstand zwischen den Klammerpaaren 22 vergrößern lässt, sodass die beiden Klammerpaare 22 nach außen bewegt werden und dadurch den Stapel 12 freigeben.

Zum Ergreifen eines Stapels 12 von Servietten 11 wird die Vorrichtung 10 in Richtung der Ablegeeinrichtung 13 in die Nähe oder vor einen Balken 15 verfahren. Durch eine nicht dargestellte Kamera, beispielsweise eine 3-D-Kamera oder ein sonstiges Sensormittel, wird von einer Steuereinrichtung erfasst, auf welchem Balken 15 sich Servietten 11 befinden bzw. auf welchem Balken 15 sich keine Servietten 11 befinden. In Abhängigkeit von der Anzahl der über einem Balken 15 hängenden Servietten 11 sowie in Abhängigkeit vom relativen Abstand der Halterung 20 zu einem bestimmten Balken 15 wird die Vorrichtung 10 bzw. der Roboter 18 mit den Greifelement 21 an den entsprechenden Balken 15 herangefahren. Durch das Kamerasystem bzw. die Sensoren werden zwei Abholpunkte 24 an der Serviette 11 bzw. dem Stapel 12 ermittelt. Dies kann rein optisch erfolgen oder durch verschiedenartige Sensoren, wie beispielsweise Abstandssensoren. An diese beiden Abholpunkte 24 wird sodann gezielt und vollautomatisch die Halterung 20 mit den Greifelement bzw. den Klammerpaaren 22 herangefahren und die Servietten 11 erfasst. Im nächsten Schritt werden die Servietten 11 bzw. Stapel 12 parallel zum Balken 15 angehoben, sodass die Servietten 11 im Wesentlichen ihre Form beibehalten. Dabei ist denkbar, dass die Greifelemente 21 eine geringfügige Querkraft bzw. Spannkraft auf die Servietten 11 ausüben. Die Vorrichtung 10 wird sodann wieder in Richtung Transportmittel 14 verfahren, um den Stapel 12 wie zuvor beschrieben abzulegen.

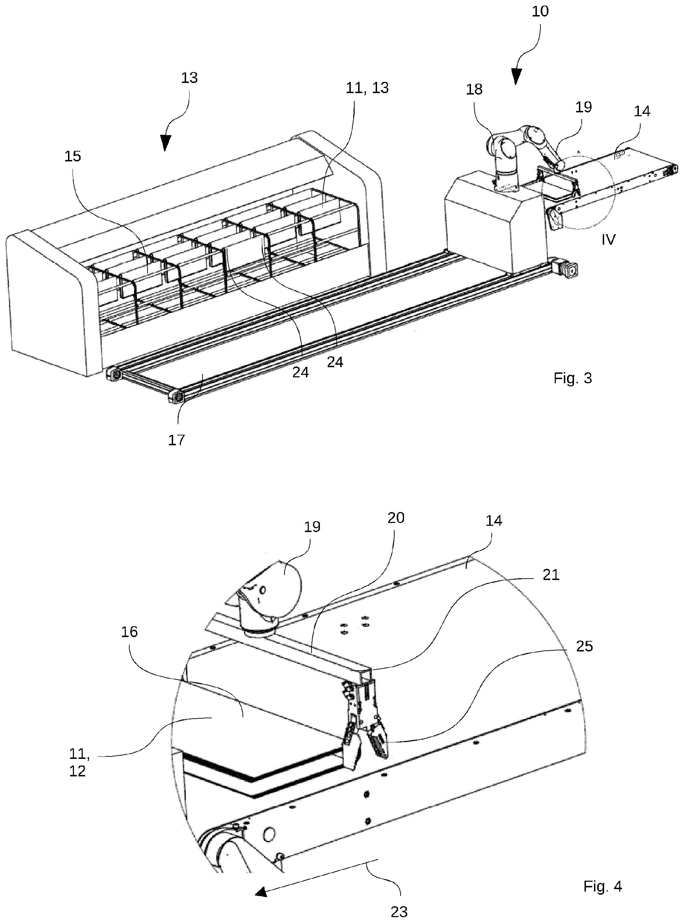

Durch die Fig. 3 und 4 wird ein weiteres Ausführungsbeispiel der Erfindung beschrieben. Während sich das Verfahren zur Handhabung der Servietten 11 zu dem vorangegangen beschriebenen Ausführungsbeispiel nur geringfügig unterscheidet, ist bei dem zweiten Ausführungsbeispiel der Balken 15 lösbar in der Ablegeeinrichtung 13 angeordnet. Die Greifelemente 21 sind bei diesem Ausführungsbeispiel als Handhabungsmittel 25 ausgebildet. Diese Handhabungsmittel 25 können Klammern, Klemmen, Greifer, Haken, Elektromagnete oder dergleichen sein. Diese Handhabungsmittel 25 dienen wenigstens nicht direkt dazu, die Servietten 11 zu handhaben. Vielmehr ergreifen die Handhabungsmittel 25 zwei Enden des Balkens 15 und bewegen den Balken 15 mitsamt den Servietten 11 bzw. dem Stapel 12 von der Ablegeeinrichtung 13 zu dem Transportmittel 14. Auch bei diesem Ausführungsbeispiel werden durch ein Kamerasystem oder entsprechende Sensorik Abholpunkte 24 festgelegt. Allerdings handelt es sich hier bei den Abholpunkten 24 um die Enden der Balken 15. Es ist denkbar, dass diese Abholpunkte 24 in einem festen Koordinatensystem der Vorrichtung 10 bzw. der Ablegeeinrichtung 13 als Koordinaten klar definiert sind, sodass ein Kamerasystem zum Erkennen der Abholpunkte 24 nicht notwendig ist. Ein Kamerasystem könnte allerdings dazu dienen, die Anzahl der Servietten 11, die bereits über Balken abgelegt wurden, zu bestimmen.

Sobald die Servietten 11 auf dem Transportmittel 14 abgelegt wurden, wird der freigewordene Balken 15 zurück in die freie Position in der Ablegeeinrichtung geführt. Dabei ist es denkbar, dass ein Handhabungsmittel 25 von einem Ende des Balkens 15 gelöst wird und der Balken 15 aus dem Stapel seitlich herausgezogen wird. Ein alternativer Verfahrensschritt kann es vorsehen, dass der Balken von dem Greifelement 21 aus dem Stapel 12 herausgezogen wird bzw. der Stapel 12 durch das Transportmittel 14 abtransportiert wird und sich dadurch von dem Balken 15 entfernt. Diese Ausführungsform ist beispielsweise in der Fig. 7 skizziert.

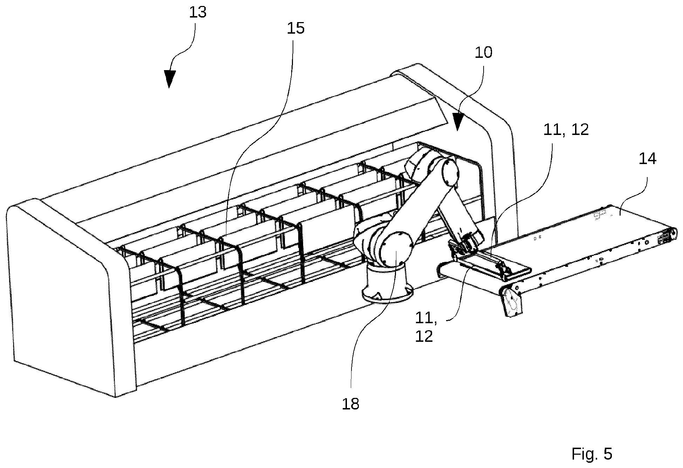

Bei dem in der Fig. 5 dargestellten Ausführungsbeispiel ist die Vorrichtung 10 an einem festen Ort vor der Ablegeeinrichtung 13 fixiert. Hier ist das Transportmittel 14 näher an die Ablegeeinrichtung 13 herangesetzt worden, um die Wege kurz zu halten. Der mehrachsige Roboter 18 ist bei diesem Ausführungsbeispiel derart ausgebildet und positioniert, dass er jeden Balken 15 der Ablegeeinrichtung 13 schnell und präzise erreichen kann. Durch den Verzicht auf die Schienen 17 kann vor allen Dingen Platz gespart werden. Darüber hinaus kann die Komplexität des gesamten Verfahrens reduziert werden.

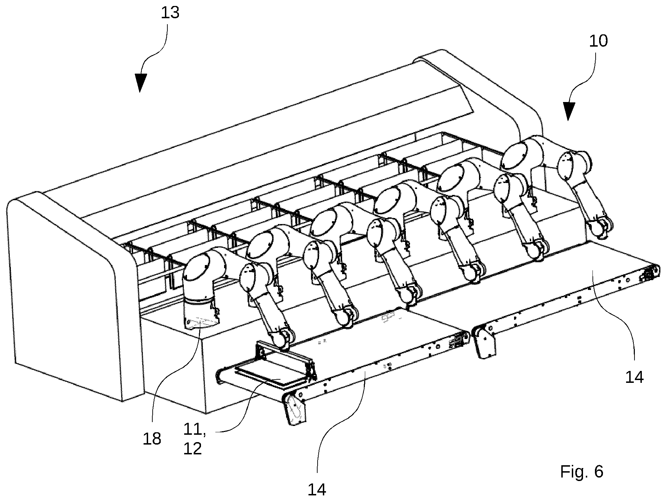

In der Fig. 6 ist vor jedem Balken 15 bzw. vor jeder Trommel von Balken 15 ein Roboter 18 angeordnet. Diesen Robotern 18 wiederum sind mehrere Transportmittel 14 zugeordnet. Durch diese Vielzahl von Robotern 18 lassen sich die Servietten 11 besonders schnell von den Balken 15 auf das Transportmittel 14 bewegen. Je nach Art der Servietten 11 oder dem Adressaten lassen sich die Stapel 12 auf verschiedene Transportmittel 14 vorsortieren. Es ist denkbar, dass die Roboter nicht nur auf die Balken 15 zugreifen, die sich direkt vor ihnen befinden, sondern auch auf benachbarte Balken 15, sofern dieser Balken 15 nicht gerade von dem entsprechenden Roboter 18 bedient werden bzw. wenn der entsprechende Roboter 18 gerade eine andere Bewegung vollführt. Auch die Steuerung dieser Roboter 18 wird von einem Steuersystem koordiniert, und zwar in Abhängigkeit von der relativen Positionierung der Greifelemente 21 zu den Balken 15 bzw. in Abhängigkeit vom Zustand der Balken 15.

### Bezugszeichenliste:

- 10: Vorrichtung
- 11: Serviette
- 12: Stapel
- 13: Ablegeeinrichtung
- 14: Transportmittel
- 15: Balken
- 16: Mittelbereich
- 17: Schiene
- 18: Roboter
- 19: Kopfende
- 20: Halterung
- 21: Greifelement
- 22: Klammerpaar
- 23: Richtung
- 24: Abholpunkt
- 25: Handhabungsmittel

## Patentansprüche

1. Vorrichtung (10) zur Handhabung von Servietten (11), wobei mindestens eine, vorzugsweise eine Vielzahl, von Servietten (11) über jeweils einen von mehreren nebeneinander angeordneten Balken (15) einer Ablegeeinrichtung (13) hängen, und zwar insbesondere derart, dass die Serviette (11) mit einem Mittelbereich (16), vorzugsweise mit einer Mitte, über einem Balken (15) abgelegt ist, **gekennzeichnet durch** mindestens einen mehrachsigen Roboter (18) mit zwei Greifelementen (21), die voll automatisiert gezielt an die mindestens eine Serviette (11) heranfahrbar sind und die mindestens eine Serviette (11) auf einen Transportmittel (14) ablegen.

2. Vorrichtung (10) zur Handhabung von Servietten (11) nach Anspruch 1, **dadurch gekennzeichnet, dass** die Greifelemente (21) jeweils ein Klammerpaar (22) zum Ergreifen der mindestens einen Serviette (11) aufweisen, wobei die Klammerpaare (22) beweglich ausgebildet sind, um in die mindestens eine hängende Serviette (11) hineinzugreifen.

3. Vorrichtung (10) zur Handhabung von Servietten (11) nach Anspruch 2, **dadurch gekennzeichnet, dass** die Klammerpaare (22) durch zwei parallel zueinander verfahrbare und parallel zueinander ausgerichtete Zylinder gebildet sind.

4. Vorrichtung (10) zur Handhabung von Servietten (11) nach Anspruch 1, **dadurch gekennzeichnet, dass** die Greifelemente (21) als Handhabungsmittel (25) ausgebildet sind, um einen Balken (15) mit mindestens einer Serviette (11) zu ergreifen und umzusetzen.

5. Vorrichtung (10) zur Handhabung von Servietten (11) nach Anspruch 4, **dadurch gekennzeichnet, dass** die Handhabungsmittel (25) als Klammern, Klemmen, Greifer, Haken, Elektromagnete oder dergleichen ausgebildet sind.

6. Vorrichtung (10) zur Handhabung von Servietten (11) nach einem der vorhergehenden Ansprüche, **dadurch gekennzeichnet, dass** die Klammerpaare (22) oder die Handhabungsmittel (25) an einer Halterung (20), vorzugsweise beweglich, befestigt sind, wobei diese Halterung (20) mit der Länge der Balken (15) korrespondiert oder der Länge der Balken (15) entspricht.

7. Vorrichtung (10) zur Handhabung von Servietten (11) nach einem der vorhergehenden Ansprüche, **gekennzeichnet durch** ein Kamerasystem oder einen Sensor für die Bestimmung der beiden Abholpunkte (24) der Serviette (11) oder dem Balken (15), an die die Klammerpaare (22) oder die Handhabungsmittel (25) heranfahrbar sind.

8. Vorrichtung (10) zur Handhabung von Servietten (11) nach einem der vorhergehenden Ansprüche, **gekennzeichnet durch** ein Steuersystem, das den Abholpunkten (24) an der Serviette (11) oder an den Balken (15) Koordinaten zuordnet und die Greifelemente (21) gezielt zu diesen Koordinaten verfahrbar sind.

9. Vorrichtung (10) zur Handhabung von Servietten (11) nach einem der vorhergehenden Ansprüche, **dadurch gekennzeichnet, dass** der Roboter (18) auf Schienen (17) angeordnet ist, wobei die Schienen (17) parallel zu den Balken (15) der Ablegeeinrichtung (13) ausgerichtet sind und der Roboter (18) auf den Schienen (17) von den Balken (15) zu dem Transportmittel (14) bewegbar ist.

10. Vorrichtung (10) zur Handhabung von Servietten (11) nach einem der vorhergehenden Ansprüche, **dadurch gekennzeichnet, dass** der Ablegeeinrichtung (13) mehrere Roboter (18) zugeordnet sind, insbesondere dass jedem der nebeneinander angeordneten Balken (15) ein Roboter (18) zugeordnet ist und den Robotern (18) jeweils ein Transportmittel (14) oder jeweils ein Transportmittel (14) zugeordnet ist.

11. Verfahren zur Handhabung von Servietten (11), wobei mindestens eine, vorzugsweise eine Vielzahl, von Servietten (11) über jeweils einen von mehreren nebeneinander angeordneten Balken (15) einer Ablegeeinrichtung (13) hängen, und zwar insbesondere derart, dass die Serviette (11) mit einem Mittelbereich (16), vorzugsweise mit einer Mitte, über einem Balken (15) abgelegt ist, **dadurch gekennzeichnet, dass** die mindestens eine Serviette (11) von zwei Greifelementen (21), die an einem mehrachsigen Roboter (18) angeordnet sind, voll automatisiert und gezielt ergriffen und auf einem Transportmittel (14) abgelegt wird.

12. Verfahren zur Handhabung von Servietten (11) nach Anspruch 11, **dadurch gekennzeichnet, dass** die Greifelemente (21) jeweils ein Klammerpaar (22) aufweisen, mit denen die mindestens eine Serviette (11) ergriffen und umgesetzt wird oder dass die Greifelemente (21) als Handhabungsmittel (25) ausgebildet sind, mit denen ein Balken (15) mit mindestens einer Serviette (11) ergriffen und umgesetzt wird.

13. Verfahren zur Handhabung von Servietten (11) nach Anspruch 11 oder 12, **dadurch gekennzeichnet, dass** durch ein Kamerasystem oder einen Sensor zwei Abholpunkte (24) an der Serviette (11) oder dem Balken (15) bestimmt werden, an die die Klammerpaare (22) oder die Handhabungsmittel (25) herangefahren werden, um die Servietten (11) oder den Balken (15) umzusetzen.

14. Verfahren zur Handhabung von Servietten (11) nach einem der Ansprüche 11 bis 13, **dadurch gekennzeichnet, dass** durch ein Steuersystem zwei Abholpunkten (24) an der Serviette (11) oder an dem Balken (15) räumliche Koordinaten zugeordnet werden, an die die Greifelemente (21) zum Erfassen der Serviette (11) oder des Balkens (15) herangefahren werden.

15. Verfahren zur Handhabung von Servietten (11) nach einem der Ansprüche 11 bis 14, **dadurch gekennzeichnet, dass** der Roboter (18) auf Schienen (17) zwischen der Ablegeeinrichtung (13) und dem Transportmittel (14) verfahren wird, um Servietten (11) oder Balken (15) mit Servietten (11) zu ergreifen und abzulegen.

16. Verfahren zur Handhabung von Servietten (11) nach einem der Ansprüche 11 bis 15, **dadurch gekennzeichnet, dass** die Servietten (11) oder die Balken (15) von mehreren Robotern (18) von der Ablegeeinrichtung (13) ergriffen und auf mehrere Transportmittel (14) abgelegt werden.
